# EUROPEAN PATENT APPLICATION

(11) **EP 4 546 931 A1**
(43) Date of publication of application: **30.04.2025**
(21) Application number: 23851699.1
(22) Date of filing: 04.08.2023
(51) Int. Cl.: H04W 74/08

(54) **METHOD AND APPARATUS USED IN COMMUNICATION NODE FOR WIRELESS COMMUNICATION**

(30) Priority: 07.08.2022 CN 202210940846; 11.08.2022 CN 202210962200
(71) Applicant: Shanghai Tuiluo Communication Technology Partnership (Limited Partnership), Shanghai 201203 (CN)
(72) Inventor: YU, Qiaoling, Shanghai 201206 (CN); ZHANG, Xiaobo, Shanghai 201206 (CN)
(74) Representative: Zhang, Fan
(86) International application number: PCT/CN2023/111141
(87) International publication number: WO 2024/032478

(57) **Abstract**

The present application discloses a method and apparatus used in a communication node for wireless communication. The communication node sends a first MSGA in a first random access process, the first MSGA comprising a first C-RNTI; in response to sending the first MSGA, a first PDCCH is received in a first msgB-Response Window; and in response to the first PDCCH being received, when any condition in a target condition set is satisfied, a first action set is executed. The first PDCCH is scrambled by the first C-RNTI, and the first PDCCH comprises an uplink grant for new transmission; the target condition set comprises at least a first condition and a second condition, the first condition comprises that a first TimeAlignmentTimer is running, the second condition comprises that at least a second timer is running, and the second timer is used for a CG-SDT process; the first action set comprises at least one of determining that a random access response is successfully received or stopping the first msgB-ResponseWindow, or determining that the first random access process is successfully completed.

## Description

### TECHNICAL FIELD

The present application relates to transmission methods and devices in wireless communication systems, and in particular to a method and device for transmission in RRC inactive state.

### BACKGROUND

New Radio (NR) supports Radio Resource Control_INACTIVE (RRC_INACTIVE) State until the 3rd Generation Partnership Project (3GPP) Rel-16 in which transmitting or receiving data in the RRC_INACTIVE state is not supported. Rel-17 conducted a Work Item (WI) on "Small Data Transmission (SDT) in NR Inactive state", which developed a technical specification for MO (UL (Uplink))-SDT to allow small packet transmission that transmits UL-oriented packets in the RRC inactive state, including Configured Grant-based SDT (CG-SDT) and Random Access-based SDT (RA-SDT).

### SUMMARY

The design of the current 3GPP protocols for the CG-SDT procedure has many problems in terms of random access performance, system complexity, and uplink transmission timing maintenance. For example, in the existing protocol, when a UE (i.e., User Equipment) performs a two-step random access procedure, if the Message A (MSGA) includes a C (Cell)-RNTI (Radio Network Temporary Identifier) MAC (Medium Access Control) CE (Control Element), when a C-RNTI-scrambled Physical Downlink Control Channel (PDCCH) transmission is received during the operation of a msgB-ResponseWindow, and, this PDCCH transmission includes an uplink grant for the purpose of a new transmission, the random access response will be considered to be received successfully if the timeAlignmentTimer associated to the PTAG (i.e, Primary TAG (Timing Advance Group)) is running, and, the msgB-ResponseWindow is stopped and, the random access procedure is considered to have been completed successfully; since the timeAlignmentTimer is not necessarily running during CG-SDT, if the UE initiates a two-step random access procedure during the CG-SDT, it cannot determine that the random access is completed in time, which may result in the expiration of the msgB ResponseWindow or even random access problems, which can have a large impact on the system performance. Therefore, the random access procedure needs to be enhanced for the CG-SDT procedure.

To address the above problem, the present application provides a solution for maintaining uplink transmission timing. In the description of the problem above, an NR system is used as an example; the present application is equally applicable to, for example, LTE system scenarios; further, although the present application gives specific implementations for MO-SDT in RRC (i.e., Radio Resource Control) inactive state, the present application can also be used, for example, in RRC inactive MT-SDT (Small Packet Transmission) scenarios to achieve technical effects similar to those of MO-SDT in the RRC inactive state. Further, though originally intended for the Uu air interface, the present application also applies to the PC5 interface. Further, the present application is intended for terminal-base station scenario, but can also be extended to Vehicle-to-Everything (V2X), terminal-relay communications, as well as relay-base station communications, where similar technical effects can be achieved. Further, the present application is intended for terminal-base station scenario, but can also be extended to Integrated Access and Backhaul (IAB) communications, where similar technical effects can be achieved. Further, although the present application is intended for Terrestrial Network (TN) scenarios, the present application is also applicable to Non-Terrestrial Network (NTN) communication scenarios, where technical effects similar to those in TN scenarios can be achieved. Additionally, the adoption of a unified solution for various scenarios contributes to the reduction of hardcore complexity and costs.

In one embodiment, interpretations of the terminology in the present application refer to definitions given in the 3GPP TS36 series.

In one embodiment, interpretations of the terminology in the present application refer to definitions given in the 3GPP TS38 series.

In one embodiment, interpretations of the terminology in the present application refer to definitions given in the 3GPP TS37 series.

In one embodiment, interpretations of the terminology in the present application refer to definitions given in Institute of Electrical and Electronics Engineers (IEEE) protocol specifications.

It should be noted that if no conflict is incurred, embodiments in any node in the present application and the characteristics of the embodiments are also applicable to any other node, and vice versa. What's more, the embodiments in the present application and the characteristics in the embodiments can be arbitrarily combined if there is no conflict.

The present application provides a method in a first node for wireless communications, comprising:
transmitting a first MSGA in a first random access procedure, the first MSGA comprising a first C-RNTI; and as a response to transmitting the first MSGA, receiving a first PDCCH in a first msgB-ResponseWindow; and as a response to the first PDCCH being received, performing a first set of actions when any condition in a target set of conditions is satisfied;
herein, the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, a problem to be solved in the present application includes: how to improve random access performance.

In one embodiment, a problem to be solved in the present application includes: how to reduce system complexity.

In one embodiment, a problem to be solved in the present application includes: how to maintain the uplink transmission timing.

In one embodiment, a problem to be solved in the present application includes: how to enhance the random access procedure for the CG-SDT procedure.

In one embodiment, a problem to be solved in the present application includes: how to confirm that the random access procedure has been successfully completed for a CG-SDT procedure.

In one embodiment, a problem to be solved in the present application includes: how to avoid the occurrence of a random access problem for a CG-SDT procedure.

In one embodiment, characteristics of the above method include: performing a first set of actions when a first condition or a second condition is satisfied.

In one embodiment, characteristics of the above method include: the target set of conditions including at least the first condition and the second condition.

In one embodiment, characteristics of the above method include: not performing the first set of actions only when each condition in the target set of conditions is not satisfied.

In one embodiment, an advantage of the above method includes: avoiding the occurrence of a random access problem.

In one embodiment, an advantage of the above method includes: timely confirmation that the random access procedure has been successfully completed.

According to one aspect of the present application, characterized in that when each condition in a target set of conditions is not satisfied, the first set of actions is not performed.

According to one aspect of the present application, characterized in that the second condition includes that the CG-SDT procedure is ongoing.

According to one aspect of the present application, characterized in comprising:
receiving a first Absolute Timing Advance Command MAC CE in a second random access procedure; and as a response to the first Absolute Timing Advance Command MAC CE being received, starting or restarting the second timer;
herein, when the first Absolute Timing Advance Command MAC CE is received, the CG-SDT procedure is ongoing.

In one embodiment, a problem to be solved in the present application includes: how to maintain the uplink transmission timing when a two-step random access procedure is performed.

In one embodiment, a problem to be solved in the present application includes: how to maintain the uplink transmission timing if a two-step random access procedure is performed in a CG-SDT procedure.

In one embodiment, characteristics of the above method include: as a response to the first Absolute Timing Advance Command MAC CE being received, starting or restarting the second timer instead of the first TimeAlignmentTimer.

In one embodiment, an advantage of the above method includes: avoiding triggering of a random access procedure due to expiration of the first timeAlignmentTimer during the CG-SDT.

In one embodiment, an advantage of the above method includes: maintaining the second timer as long as possible during the CG-SDT

According to one aspect of the present application, characterized in comprising:
determining that the second timer is expired; and as a response to determining that the second timer is expired, performing a second set of actions;
herein, the second set of actions includes at least one of clearing any configured uplink grants or flushing all Hybrid Automatic Repeat Request (HARQ) buffers or maintaining N_{TA} of the first TAG.

According to one aspect of the present application, characterized in comprising:
when a condition for initiating an RA-SDT procedure is satisfied, determining whether to consider the second timer as expired and perform the second set of actions according to whether the second timer is running, and, a MAC sublayer of the first node indicating to an upper layer of the first node that a condition for initiating an SDT procedure is satisfied;
herein, the action of determining whether to consider the second timer as expired and perform the second set of actions according to whether the second timer is running comprises: when the second timer is running, considering the second timer as expired and performing the second set of actions.

In one embodiment, an advantage of the above method includes: avoiding unnecessary operations.

In one embodiment, an advantage of the above method includes: avoiding repetitive operations.

According to one aspect of the present application, characterized in comprising:
when a condition for initiating a CG-SDT procedure is not satisfied and a condition for initiating an RA-SDT procedure is not satisfied, considering the second timer as expired and performing the second set of actions, and a MAC sublayer of the first node indicating to an upper layer of the first node that a condition for initiating an SDT procedure is not satisfied.

In one embodiment, an advantage of the above method includes: avoiding cross-layer operations.

In one embodiment, an advantage of the above method includes: reducing system complexity.

In one embodiment, an advantage of the above method includes: releasing CG resources in a timely manner and improving resource utilization.

According to one aspect of the present application, characterized in comprising:
when a condition for initiating an RA-SDT procedure is satisfied, a MAC sublayer of the first node indicating to an upper layer of the first node that a condition for initiating an SDT procedure is satisfied; after the MAC sublayer of the first node has indicated to the upper layer of the first node that the condition for initiating the SDT procedure is satisfied, starting a timer T319a, and, an RRC sublayer of the first node indicating that a MAC entity should stop the second timer.

In one embodiment, an advantage of the above method includes: maintaining CG resource as much as possible so that it is still possible to initiate the CG-SDT procedure even when an access attempt is barred.

The present application provides a method in a second node for wireless communications, comprising:
receiving a first MSGA in a first random access procedure, the first MSGA comprising a first C-RNTI; and as a response to receiving the first MSGA, transmitting a first PDCCH;
herein, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

According to one aspect of the present application, characterized in that when each condition in a target set of conditions is not satisfied, the first set of actions is not performed.

According to one aspect of the present application, characterized in that the second condition includes that the CG-SDT procedure is ongoing.

According to one aspect of the present application, characterized in comprising:
transmitting a first Absolute Timing Advance Command MAC CE during a second random access procedure;
herein, as a response to the first Absolute Timing Advance Command MAC CE being received by a transmitter of the first MSGA, the transmitter of the first MSGA starts or restarts the second timer; when the first Absolute Timing Advance Command MAC CE is received, the CG-SDT procedure is ongoing.

According to one aspect of the present application, characterized in that as a response to that the second timer is expired, a transmitter of the first MSGA performs a second set of actions; the second set of actions includes at least one of clearing any configured uplink grants or flushing all HARQ buffers or maintaining N_{TA} of the first TAG.

According to one aspect of the present application, characterized in that when a condition for initiating an RA-SDT procedure is satisfied, a transmitter of the first MSGA determines whether or not to consider the second timer as expired and perform the second set of actions according to whether the second timer is running, and a MAC sublayer of the transmitter of the first MSGA indicates to an upper layer of the transmitter of the first MSGA that a condition for initiating an SDT procedure is satisfied; herein, the action of determining whether to consider the second timer as expired and perform the second set of actions according to whether the second timer is running comprises: when the second timer is running, considering the second timer as expired and performing the second set of actions.

According to one aspect of the present application, characterized in that when a condition for initiating a CG-SDT procedure is not satisfied and a condition for initiating an RA-SDT procedure is not satisfied, a transmitter of the first MSGA considers the second timer as expired and performs the second set of actions, and a MAC sublayer of the transmitter of the first MSGA indicates to an upper layer of the transmitter of the first MSGA that a condition for initiating an SDT procedure is not satisfied.

According to one aspect of the present application, characterized in that when a condition for initiating an RA-SDT procedure is satisfied, a MAC sublayer of the transmitter of the first MSGA indicates to an upper layer of the transmitter of the first MSGA that a condition for initiating an SDT procedure is satisfied; after the indication of the MAC sublayer of the transmitter of the first MSGA to the upper layer of the transmitter of the first MSGA that the condition for initiating the SDT procedure has been satisfied, the transmitter of the first MSGA starts a timer T319a, and, an RRC sublayer of the transmitter of the first MSGA indicates that a MAC entity should stop the second timer.

The present application provides a first node for wireless communications, comprising:
a first processor, transmitting a first MSGA in a first random access procedure, the first MSGA comprising a first C-RNTI; and as a response to transmitting the first MSGA, receiving a first PDCCH in a first msgB-ResponseWindow; and as a response to the first PDCCH being received, performing a first set of actions when any condition in a target set of conditions is satisfied;
herein, the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

The present application provides a second node for wireless communications, comprising:
a second processor, receiving a first MSGA in a first random access procedure, the first MSGA comprising a first C-RNTI; and as a response to receiving the first MSGA, transmitting a first PDCCH;
herein, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, compared with the prior art, the present application is advantageous in the following aspects:
- avoiding the occurrence of random access problems;
- confirming in a timely manner that a random access procedure is successfully completed;
- avoiding triggering of a random access procedure due to expiration of the first timeAlignmentTimer during the CG-SDT;
- maintaining the second timer as long as possible during the CG-SDT;
- avoiding unnecessary operations;
- avoiding repetitive operations;
- avoid cross-layer operations;
- increasing the resource utilization ratio.

### BRIEF DESCRIPTION OF THE DRAWINGS

Other features, objects and advantages of the present application will become more apparent from the detailed description of non-restrictive embodiments taken in conjunction with the following drawings:
FIG. 1 illustrates a flowchart of transmission of a first MSGA and a first PDCCH according to one embodiment of the present application.
FIG. 2 illustrates a schematic diagram of a network architecture according to one embodiment of the present application.
FIG. 3 illustrates a schematic diagram of a radio protocol architecture of a user plane and a control plane according to one embodiment of the present application.
FIG. 4 illustrates a schematic diagram of a first communication device and a second communication device according to one embodiment of the present application.
FIG. 5 illustrates a flowchart of radio signal transmission according to one embodiment of the present application.
FIG. 6 illustrates a flowchart of radio signal transmission according to another embodiment of the present application.
FIG. 7 illustrates a flowchart of a second timer's expiration triggering a second set of actions according to one embodiment of the present application.
FIG. 8 illustrates a flowchart of determining whether to consider a second timer as expired and perform a second set of actions according to whether the second timer is running according to one embodiment of the present application.
FIG. 9 illustrates a flowchart of considering a second timer as expired and a second set of actions is performed when an SDT condition is not satisfied according to one embodiment of the present application.
FIG. 10 illustrates a structure block diagram of a processing device used in a first node according to one embodiment of the present application.
FIG. 11 illustrates a structure block diagram of a processing device used in a second node according to one embodiment of the present application.
FIG. 12 illustrates a flowchart of an RRC sublayer of a first node indicating that a MAC entity should stop a second timer according to one embodiment of the present application.
FIG. 13 illustrates a flowchart of a condition for initiating a CG-SDT procedure not being satisfied according to one embodiment of the present application.

### DESCRIPTION OF THE EMBODIMENTS

The technical scheme of the present application is described below in further details in conjunction with the drawings. It should be noted that the embodiments of the present application and the characteristics of the embodiments may be arbitrarily combined if no conflict is caused.

### Embodiment 1

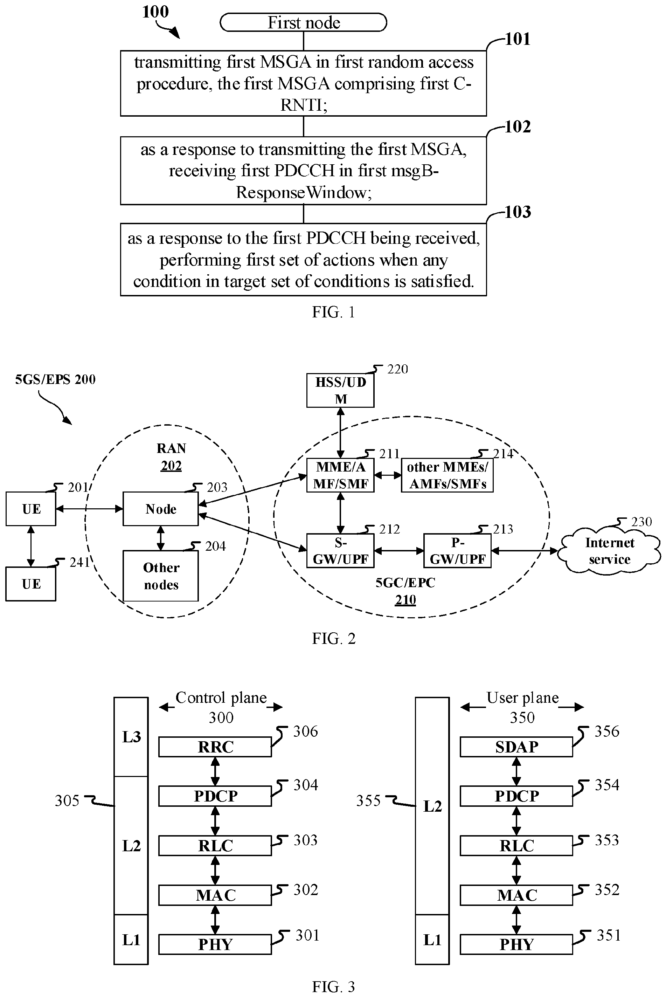

Embodiment 1 illustrates a flowchart of transmission of a first MSGA and a first PDCCH according to one embodiment of the present application, as shown in FIG. 1. In FIG. 1, each step represents a step, it should be particularly noted that the sequence order of each box herein does not imply a chronological order of steps marked respectively by these boxes.

In Embodiment 1, the first node of the present application transmits a first MSGA in a first random access procedure in step 101, the first MSGA comprising a first C-RNTI; and in step 102, as a response to transmitting the first MSGA, receives a first PDCCH in a first msgB-ResponseWindow; and in step 103, as a response to the first PDCCH being received, performs a first set of actions when any condition in a target set of conditions is satisfied; herein, the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the first random access procedure is initiated on a first cell.

In one embodiment, the first cell is a serving cell of the first node.

In one embodiment, the first cell is a Special Cell (SpCell) of the first node.

In one embodiment, the first cell is a Primary Cell (PCell) of the first node.

In one embodiment, the first cell is a PCell of the first node at the time when an RRCRelease message carrying suspendConfig is received.

In one embodiment, the first cell is a PCell of the first node before entering RRC_INACTIVE from RRC_CONNECTED state.

In one embodiment, a RA_TYPE is set to 2-step RA during the first random access procedure.

In one embodiment, the first MSGA is used in a two-step random access procedure.

In one embodiment, the first MSGA is an MsgA message.

In one embodiment, the first MSGA comprises a Physical random access channel (PRACH) transmission and a Physical Uplink Shared Channel (PUSCH) transmission.

In one embodiment, the first MSGA comprises a Preamble.

In one embodiment, a PRACH resource of the first MSGA is used for a two-step random access procedure.

In one embodiment, the first MSGA does not comprise a Common Control Channel (CCCH) Service Data Unit (SDU).

In one embodiment, a PUSCH resource occupied by the first MSGA is associated to a Preamble of the first MSGA.

In one embodiment, a PUSCH resource occupied by the first MSGA is configured via an RRC message.

In one embodiment, the first MSGA comprises one C-RNTI MAC CE, the one C-RNTI MAC CE comprising the first C-RNTI.

In one embodiment, the first C-RNTI occupies 16 bits.

In one embodiment, the first C-RNTI is a C-RNTI.

In one embodiment, the first C-RNTI is a C-RNTI of the first node in the first cell.

In one embodiment, for the format of the C-RNTI MAC CE, refer to 3GPP TS 38.331.

In one embodiment, a LCID field in a MAC subheader corresponding to the C-RNTI MAC CE is set to 58.

In one embodiment, one MAC field in the C-RNTI MAC CE is set to the first C-RNTI, the one MAC field occupying 16 bits.

In one embodiment, the first msgB-ResponseWindow is an msgB-ResponseWindow, the msgB-ResponseWindow referring to 3GPP TS 38.321.

In one embodiment, a random access response is monitored in the first msgB-ResponseWindow.

In one embodiment, a random access response for the first MSGA is monitored in the first msgB-ResponseWindow.

In one embodiment, a random access response for a Preamble in the first MSGA is monitored in the first msgB-ResponseWindow.

In one embodiment, a PDCCH of the first cell being identified by an MSGB-RNTI is monitored in the first msgB-ResponseWindow; a PRACH occasion of a Preamble of at least the MSGA is used to determine the MSGB-RNTI.

In one embodiment, a PDCCH of the first cell being identified by the first C-RNTI is monitored in the first msgB-ResponseWindow.

In one embodiment, an end time at which the first MSGA is transmitted is used to determine a start time of the first msgB-ResponseWindow.

In one embodiment, the first PDCCH is received during the time while the first msgB-ResponseWindow is running.

In one embodiment, the first PDCCH is a random access response for the first msgB-ResponseWindow.

In one embodiment, the first PDCCH is addressed to the first C-RNTI.

In one embodiment, the first PDCCH is identified by the first C-RNTI.

In one embodiment, a Cyclic Redundancy Check (CRC) of the first PDCCH is scrambled by the first C-RNTI.

In one embodiment, the first PDCCH is used to schedule a PUSCH.

In one embodiment, the first PDCCH is used to schedule an uplink grant for a new transmission.

In one embodiment, the uplink grant for a new transmission is associated to a HARQ process.

In one embodiment, a HARQ process number of a HARQ process to which the uplink grant for a new transmission is associated is equal to 0.

In one embodiment, the first PDCCH is received on a PDCCH.

In one embodiment, the first PDCCH is a PDCCH transmission.

In one embodiment, the first PDCCH is a PDCCH transmission of the first cell.

In one embodiment, the first PDCCH is a piece of Downlink Control Information (DCI).

In one embodiment, the first PDCCH is a DCI and the first PDCCH includes a Frequency domain resource assignment field.

In one embodiment, the first PDCCH is a DCI and the first PDCCH includes a Time domain resource assignment field.

In one embodiment, the first PDCCH is a DCI and the first PDCCH includes a New data indicator field.

In one embodiment, the first PDCCH is a DCI and the value of a New data indicator field in the first PDCCH is toggled.

In one embodiment, the first PDCCH is a DCI and the value of a New data indicator field in the first PDCCH is considered to be toggled.

In one embodiment, the first PDCCH is a DCI, the DCI being in a DCI format 0_0.

In one embodiment, the first PDCCH is a DCI, the DCI being in a DCI format 0_1.

In one embodiment, the phrase as a response to the first PDCCH being received comprises: if the first PDCCH is received.

In one embodiment, the phrase as a response to the first PDCCH being received comprises: when the first PDCCH is received.

In one embodiment, the phrase as a response to the first PDCCH being received comprises: when the MAC sublayer of the first node receives a notification from a lower layer that the first PDCCH is received.

In one embodiment, the target set of conditions includes the first condition, and, the target set of conditions includes the second condition.

In one embodiment, the target set of conditions includes only the first condition and the second condition.

In one embodiment, the target set of conditions includes at least one condition other than the first condition and the second condition.

In one embodiment, the phrase "any condition in a target set of conditions is satisfied" comprises that the first condition is satisfied.

In one embodiment, the phrase "any condition in a target set of conditions is satisfied" comprises that the second condition is satisfied.

In one embodiment, the phrase "any condition in a target set of conditions is satisfied" comprises that the first condition or the second condition is satisfied.

In one embodiment, the phrase "any condition in a target set of conditions is satisfied" comprises that any of the first condition or the second condition is satisfied.

In one embodiment, the phrase "any condition in a target set of conditions is satisfied" comprises that both the first condition and the second condition are satisfied.

In one embodiment, the phrase "any condition in a target set of conditions is satisfied" comprises that as long as one condition in the target set of conditions is satisfied.

In one embodiment, as a response to the first PDCCH being received, the first set of actions is performed when the first condition is satisfied.

In one embodiment, as a response to the first PDCCH being received, the first set of actions is performed when the second condition is satisfied.

In one embodiment, as a response to the first PDCCH being received, when the first condition or the second condition is satisfied, the first set of actions is performed.

In one embodiment, as a response to the first PDCCH being received, when either the first condition or the second condition is satisfied, the first set of actions is performed.

In one embodiment, as a response to the first PDCCH being received, when both the first condition and the second condition are satisfied, the first set of actions is performed.

In one embodiment, as a response to the first PDCCH being received, when any condition in the target set of conditions is satisfied, the first set of actions is performed.

In one embodiment, as a response to the first PDCCH being received, the first set of actions is performed as long as one condition in the target set of conditions is satisfied.

In one embodiment, the first condition includes at least one condition other than that the first TimeAlignmentTimer is running.

In one embodiment, the first condition includes only that the first TimeAlignmentTimer is running.

In one embodiment, the first condition is that the first TimeAlignmentTimer is running.

In one embodiment, the first condition is satisfied when the first TimeAlignmentTimer is running.

In one embodiment, the first condition is not satisfied when the first TimeAlignmentTimer is not running.

In one embodiment, the second condition includes at least one condition other than that the second timer is running.

In one embodiment, the second condition includes only that the second timer is running.

In one embodiment, the second condition is that the second timer is running.

In one embodiment, the second condition is satisfied when the second timer is running.

In one embodiment, the second condition is not satisfied when the second timer is not running.

In one embodiment, the first TimeAlignmentTimer is a timeAlignmentTimer.

In one embodiment, the first TimeAlignmentTimer is for a first TAG.

In one embodiment, the first TimeAlignmentTimer is used to determine how long a MAC entity considers all serving cells in a first TAG to be uplink time aligned.

In one embodiment, the first TAG is a PTAG.

In one embodiment, the first TAG has a TAG-Id equal to 0.

In one embodiment, the first TAG includes at least the first cell.

In one embodiment, the second timer is a cg-SDT-TimeAlignmentTimer.

In one embodiment, the second timer is used for a CG-SDT procedure.

In one embodiment, the second timer is for the first TAG.

In one embodiment, the second timer is for the first cell.

In one embodiment, the second timer is used to determine a length of time in which uplink times for CG-SDT are aligned as considered by a MAC entity.

In one embodiment, the first set of actions includes at least determining that a random access response is successfully received, and, stopping the first msgB-ResponseWindow, and, determining that the first random access procedure is successfully completed.

In one embodiment, the first set of actions includes only determining that a random access response is successfully received, and, stopping the first msgB-ResponseWindow, and, determining that the first random access procedure is successfully completed.

In one embodiment, the first set of actions includes determining that a random access response is successfully received, and then, stopping the first msgB-ResponseWindow, and afterwards, determining that the first random access procedure is successfully completed.

In one embodiment, the phrase "determining that a random access response is successfully received" comprises: considering that the random access response is successfully received.

In one embodiment, the phrase "determining that the first random access procedure is successfully completed" comprises: considering that the first random access procedure is successfully completed.

In one embodiment, the phrase "when..." comprises: if ...

In one embodiment, the phrase "when..." comprises: as long as ...

In one embodiment, the phrase "when..." comprises: in case that ...

In one embodiment, the phrase "when..." comprises: once ...

### Embodiment 2

Embodiment 2 illustrates a schematic diagram of a network architecture according to one embodiment of the present application, as shown in FIG. 2. FIG. 2 illustrates a network architecture 200 of 5G New Radio (NR)/Long-Term Evolution (LTE)/Long-Term Evolution Advanced (LTE-A) systems. The 5G NR/LTE/LTE-A network architecture 200 may be called a 5G System/ Evolved Packet System (5GS/EPS) 200 or other suitable terminology. The 5GS/EPS 200 may comprise UE(s) 201, a RAN 202, a 5G Core Network/Evolved Packet Core (5GC/EPC) 210, a Home Subscriber Server/ Unified Data Management(HSS/UDM) 220 and an Internet Service 230. The 5GS/EPS 200 may be interconnected with other access networks. For simple description, the entities/interfaces are not shown. As shown in FIG. 2, the 5GS/EPS 200 provides packet switching services. Those skilled in the art will find it easy to understand that various concepts presented throughout the present application can be extended to networks providing circuit switching services or other cellular networks. The RAN comprises a node 203 and another node 204. The node 203 provides UE 201 oriented user plane and control plane terminations. The node 203 can be connected to other node 204 via an Xn interface (like backhaul)/X2 interface. The node 203 may be called a base station, a base transceiver station, a radio base station, a radio transceiver, a transceiver function, a Base Service Set (BSS), an Extended Service Set (ESS), a Transmitter Receiver Point (TRP) or some other applicable terms. The node 203 provides an access point of the 5GC/EPC 210 for the UE 201. Examples of UE 201 include cellular phones, smart phones, Session Initiation Protocol (SIP) phones, laptop computers, Personal Digital Assistant (PDA), Satellite Radios, non-terrestrial base station communications, satellite mobile communications, Global Positioning Systems (GPSs), multimedia devices, video devices, digital audio players (for example, MP3 players), cameras, games consoles, unmanned aerial vehicles, air vehicles, narrow-band physical network equipment, machine-type communication equipment, land vehicles, automobiles, wearable equipment, or any other devices having similar functions. Those skilled in the art also can call the UE 201 a mobile station, a subscriber station, a mobile unit, a subscriber unit, a wireless unit, a remote unit, a mobile device, a wireless device, a radio communication device, a remote device, a mobile subscriber station, an access terminal, a mobile terminal, a wireless terminal, a remote terminal, a handset, a user proxy, a mobile client, a client or some other appropriate terms. The node 203 is connected to the 5GC/EPC 210 via an S1/NG interface. The 5GC/EPC 210 comprises a Mobility Management Entity (MME)/ Authentication Management Field (AMF)/ Session Management Function (SMF) 211, other MMEs/AMFs/SMFs 214, a Service Gateway (S-GW)/User Plane Function (UPF) 212 and a Packet Date Network Gateway (P-GW)/UPF 213. The MME/AMF/SMF 211 is a control node for processing a signaling between the UE 201 and the 5GC/EPC 210. Generally, the MME/AMF/SMF 211 provides bearer and connection management. All user Internet Protocol (IP) packets are transmitted through the S-GW/UPF 212. The S-GW/UPF 212 is connected to the P-GW/UPF 213. The P-GW 213 provides UE IP address allocation and other functions. The P-GW/UPF 213 is connected to the Internet Service 230. The Internet Service 230 comprises IP services corresponding to operators, specifically including Internet, Intranet, IP Multimedia Subsystem (IMS) and Packet Switching Streaming (PSS) services.

In one embodiment, the UE 201 corresponds to the first node in the present application.

In one embodiment, the UE 201 is a UE.

In one embodiment, the UE 201 is a BaseStation (BS).

In one embodiment, the UE 201 is a relay device.

In one embodiment, the node 203 corresponds to the second node in the present application.

In one embodiment, the node 203 is a base station.

In one embodiment, the node 203 is a UE.

In one embodiment, the node 203 is a relay device.

In one embodiment, the UE supports transmissions in Non-Terrestrial Network (NTN).

In one embodiment, the UE supports transmissions in Terrestrial Network (TN).

In one embodiment, the UE comprises a cellphone, or a terminal, or an aircraft, or a vehicle-mounted terminal, or a vessel, or an IoT terminal, or an IIoT terminal, or testing equipment, or a signaling test instrument.

In one embodiment, the base station comprises a Base Transceiver Station (BTS).

In one embodiment, the base station comprises a NodeB (NB), or a gNB, or an eNB, or an ng-eNB, or an en-gNB, or a TRP (i.e., Transmitter Receiver Point), or a CU (i.e., Centralized Unit) or a DU (i.e., Distributed Unit).

In one embodiment, the base station supports transmissions in NTN.

In one embodiment, the base station supports transmissions in TN.

In one embodiment, the base station comprises a Macro Cellular base station, or a Micro Cell base station, or a Pico Cell base station, or a Femtocell base station, or testing equipment, or a signaling test instrument.

In one embodiment, the base station comprises an IAB (i.e., Integrated Access and Backhaul)-node, or an IAB-donor, or an IAB-donor-CU, or an IAB-donor-DU, or an IAB-DU, or an IAB-MT.

In one embodiment, the relay includes a relay, or L3 relay, or L2 relay, or a Router, or an Exchanger, or a UE, or a base station.

### Embodiment 3

Embodiment 3 illustrates a schematic diagram of a radio protocol architecture of a user plane and a control plane according to the present application, as shown in FIG. 3. FIG. 3 is a schematic diagram illustrating an embodiment of a radio protocol architecture of a user plane 350 and a control plane 300. In FIG. 3, the radio protocol architecture for a control plane 300 is represented by three layers, which are layer1, layer2 and layer3. The layer 1 (L1) is the lowest layer which performs signal processing functions of various PHY layers. The L1 is called PHY 301 in the present application. The layer 2 (L2) 305 is above the PHY 301, and is in charge of the link between the UE and the gNB via the PHY 301. The L2 305 comprises a Medium Access Control (MAC) sublayer 302, a Radio Link Control (RLC) sublayer 303 and a Packet Data Convergence Protocol (PDCP) sublayer 304. The PDCP sublayer 304 provides multiplexing among variable radio bearers and logical channels. The PDCP sublayer 304 provides security by encrypting a packet and provides support for inter-cell handover. The RLC sublayer 303 provides segmentation and reassembling of a higher-layer packet, retransmission of a lost packet, and reordering of a packet so as to compensate the disordered receiving caused by Hybrid Automatic Repeat Request (HARQ). The MAC sublayer 302 provides multiplexing between a logical channel and a transport channel. The MAC sublayer 302 is also responsible for allocating various radio resources (i.e., resource block) in a cell. The MAC sublayer 302 is also in charge of HARQ operation. In the control plane 300, The RRC sublayer 306 in the L3 layer is responsible for acquiring radio resources (i.e., radio bearer) and configuring the lower layer using an RRC signaling. The radio protocol architecture in the user plane 350 comprises the L1 layer and the L2 layer. In the user plane 350, the radio protocol architecture used for a PHY layer 351, a PDCP sublayer 354 of the L2 layer 355, an RLC sublayer 353 of the L2 layer 355 and a MAC sublayer 352 of the L2 layer 355 is almost the same as the radio protocol architecture used for corresponding layers and sublayers in the control plane 300, but the PDCP sublayer 354 also provides header compression used for higher-layer packet to reduce radio transmission overhead. The L2 layer 355 in the user plane 350 also comprises a Service Data Adaptation Protocol (SDAP) sublayer 356, which is in charge of the mapping between QoS streams and a Data Radio Bearer (DRB), so as to support diversified traffics.

In one embodiment, the radio protocol architecture in FIG. 3 is applicable to the first node in the present application.

In one embodiment, the radio protocol architecture in FIG. 3 is applicable to the second node in the present application.

In one embodiment, the first MSGA in the present application is generated by the RRC306.

In one embodiment, the first MSGA in the present application is generated by the MAC302 or the MAC352.

In one embodiment, the first MSGA in the present application is generated by the PHY301 or the PHY351.

In one embodiment, the first PDCCH in the present application is generated by the PHY301 or the PHY351.

In one embodiment, the first Absolute Timing Advance Command MAC CE in the present application is generated by the MAC302 or the MAC352.

### Embodiment 4

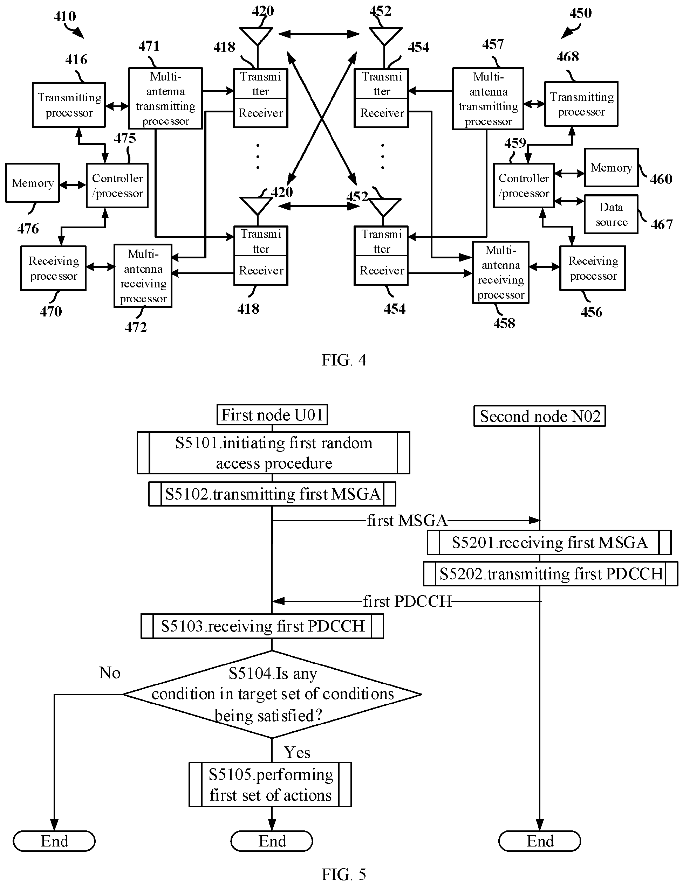

Embodiment 4 illustrates a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitter/receiver 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitter/receiver 418 and an antenna 420.

In a transmission from the second communication device 410 to the first communication device 450, at the second communication device 410, an upper layer packet from a core network is provided to the controller/processor 475. The controller/processor 475 provides functions of the L2 layer. In the transmission from the second communication device 410 to the first communication device 450, the controller/processor 475 provides header compression, encryption, packet segmentation and reordering, and multiplexing between a logical channel and a transport channel, and radio resource allocation of the first communication device 450 based on various priorities. The controller/processor 475 is also in charge of a retransmission of a lost packet and a signaling to the first communication device 450. The transmitting processor 416 and the multi-antenna transmitting processor 471 perform various signal processing functions used for the L1 layer (i.e., PHY). The transmitting processor 416 performs coding and interleaving so as to ensure a Forward Error Correction (FEC) at the second communication device 410 side and the mapping of signal clusters corresponding to each modulation scheme (i.e., BPSK, QPSK, M-PSK, and M-QAM, etc.). The multi-antenna transmitting processor 471 performs digital spatial precoding, which includes precoding based on codebook and precoding based on non-codebook, and beamforming processing on encoded and modulated signals to generate one or more spatial streams. The transmitting processor 416 then maps each spatial stream into a subcarrier. The mapped symbols are multiplexed with a reference signal (i.e., pilot frequency) in time domain and/or frequency domain, and then they are assembled through Inverse Fast Fourier Transform (IFFT) to generate a physical channel carrying time-domain multicarrier symbol streams. After that the multi-antenna transmitting processor 471 performs transmission analog precoding/beamforming on the time-domain multicarrier symbol streams. Each transmitter 418 converts a baseband multicarrier symbol stream provided by the multi-antenna transmitting processor 471 into a radio frequency (RF) stream, which is later provided to different antennas 420.

In a transmission from the second communication device 410 to the first communication device 450, at the first communication device 450, each receiver 454 receives a signal via a corresponding antenna 452. Each receiver 454 recovers information modulated to the RF carrier, and converts the radio frequency stream into a baseband multicarrier symbol stream to be provided to the receiving processor 456. The receiving processor 456 and the multi-antenna receiving processor 458 perform signal processing functions of the L1 layer. The multi-antenna receiving processor 458 performs reception analog precoding/beamforming on a baseband multicarrier symbol stream provided by the receiver 454. The receiving processor 456 converts the processed baseband multicarrier symbol stream from time domain into frequency domain using FFT. In frequency domain, a physical layer data signal and a reference signal are de-multiplexed by the receiving processor 456, where the reference signal is used for channel estimation, while the data signal is subjected to multi-antenna detection in the multi-antenna receiving processor 458 to recover any first communication device 450-targeted spatial stream. Symbols on each spatial stream are demodulated and recovered in the receiving processor 456 to generate a soft decision. Then the receiving processor 456 decodes and de-interleaves the soft decision to recover the higher-layer data and control signal transmitted by the second communication device 410 on the physical channel. Next, the higher-layer data and control signal are provided to the controller/processor 459. The controller/processor 459 provides functions of the L2 layer. The controller/processor 459 can be associated with the memory 460 that stores program code and data; the memory 460 may be called a computer readable medium. In the transmission from the second communication device 410 to the second communication device 450, the controller/processor 459 provides demultiplexing between a transport channel and a logical channel, packet reassembling, decrypting, header decompression and control signal processing so as to recover a higher-layer packet from the core network. The higher-layer packet is later provided to all protocol layers above the L2 layer. Or various control signals can be provided to the L3 for processing.

In a transmission from the first communication device 450 to the second communication device 410, at the first communication device 450, the data source 467 is configured to provide a higher-layer packet to the controller/processor 459. The data source 467 represents all protocol layers above the L2 layer. Similar to a transmitting function of the second communication device 410 described in the transmission from the second communication node 410 to the first communication node 450, the controller/processor 459 performs header compression, encryption, packet segmentation and reordering, and multiplexing between a logical channel and a transport channel based on radio resource allocation so as to provide the L2 layer functions used for the user plane and the control plane. The controller/processor 459 is also responsible for a retransmission of a lost packet, and a signaling to the second communication device 410. The transmitting processor 468 performs modulation and mapping, as well as channel coding, and the multi-antenna transmitting processor 457 performs digital multi-antenna spatial precoding, including precoding based on codebook and precoding based on non-codebook, and beamforming. The transmitting processor 468 then modulates generated spatial streams into multicarrier/single-carrier symbol streams. The modulated symbol streams, after being subjected to analog precoding/beamforming in the multi-antenna transmitting processor 457, are provided from the transmitter 454 to each antenna 452. Each transmitter 454 firstly converts a baseband symbol stream provided by the multi-antenna transmitting processor 457 into a radio frequency symbol stream, and then provides the radio frequency symbol stream to the antenna 452.

In a transmission from the first communication device 450 to the second communication device 410, the function of the second communication device 410 is similar to the receiving function of the first communication device 450 described in the transmission from the second communication device 410 to the first communication device 450. Each receiver 418 receives a radio frequency signal via a corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly provide functions of the L1 layer. The controller/processor 475 provides functions of the L2 layer. The controller/processor 475 can be associated with the memory 476 that stores program code and data; the memory 476 may be called a computer readable medium. In the transmission from the first communication device 450 to the second communication device 410, the controller/processor 475 provides de-multiplexing between a transport channel and a logical channel, packet reassembling, decrypting, header decompression, control signal processing so as to recover a higher-layer packet from the first communication device (UE) 450. The higher-layer packet coming from the controller/processor 475 may be provided to the core network.

In one embodiment, the first communication device 450 comprises at least one processor and at least one memory. The at least one memory comprises computer program codes; the at least one memory and the computer program codes are configured to be used in collaboration with the at least one processor. The first communication device 450 at least transmits a first MSGA in a first random access procedure, the first MSGA comprising a first C-RNTI; and as a response to transmitting the first MSGA, receives a first PDCCH in a first msgB-ResponseWindow; and as a response to the first PDCCH being received, performs a first set of actions when any condition in a target set of conditions is satisfied; herein, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the first communication device 450 comprises a memory that stores a computer readable instruction program. The computer readable instruction program generates actions when executed by at least one processor. The actions include: transmitting a first MSGA in a first random access procedure, the first MSGA comprising a first C-RNTI; and as a response to transmitting the first MSGA, receiving a first PDCCH in a first msgB-ResponseWindow; and as a response to the first PDCCH being received, performing a first set of actions when any condition in a target set of conditions is satisfied; herein, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the second communication device 410 comprises at least one processor and at least one memory. The at least one memory comprises computer program codes; the at least one memory and the computer program codes are configured to be used in collaboration with the at least one processor. The second communication device 410 at least receives a first MSGA in a first random access procedure, the first MSGA comprising a first C-RNTI; and as a response to receiving the first MSGA, transmits a first PDCCH; herein, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the second communication device 410 comprises a memory that stores a computer readable instruction program. The computer readable instruction program generates actions when executed by at least one processor. The actions include: receiving a first MSGA in a first random access procedure, the first MSGA comprising a first C-RNTI; and as a response to receiving the first MSGA, transmitting a first PDCCH; herein, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, at least one of the antenna 452, the receiver 454, the receiving processor 456 or the controller/processor 459 is used for receiving a first PDCCH.

In one embodiment, at least one of the antenna 420, the transmitter 418, the transmitting processor 416 or the controller/processor 475 is used for transmitting a first PDCCH.

In one embodiment, at least one of the antenna 452, the receiver 454, the receiving processor 456 or the controller/processor 459 is used for receiving a first Absolute Timing Advance Command MAC CE.

In one embodiment, at least one of the antenna 420, the transmitter 418, the transmitting processor 416 or the controller/processor 475 is used for transmitting a first Absolute Timing Advance Command MAC CE.

In one embodiment, at least one of the antenna 452, the transmitter 454, the transmitting processor 468 or the controller/processor 459 is used for transmitting a first MSGA.

In one embodiment, at least one of the antenna 420, the receiver 418, the receiving processor 470 or the controller/processor 475 is used for receiving a first MSGA.

In one embodiment, the first communication device 450 corresponds to the first node in the present application.

In one embodiment, the second communication device 410 corresponds to the second node in the present application.

In one embodiment, the first communication device 450 is a UE.

In one embodiment, the first communication device 450 is a terminal device.

In one embodiment, the first communication device 450 is an IoT device.

In one embodiment, the first communication device 450 is a relay device.

In one embodiment, the first communication device 450 is a piece of testing equipment.

In one embodiment, the second communication device 410 is a base station.

In one embodiment, the second communication device 410 is a relay device.

In one embodiment, the second communication device 410 is a piece of testing equipment.

### Embodiment 5

Embodiment 5 illustrates a flowchart of radio signal transmission according to one embodiment of the present application, as shown in FIG. 5. It should be particularly noted that the sequence illustrated herein does not set any limit to the signal transmission order or implementation order in the present application.

A **first node U01** initiates a first random access procedure in step S5101; transmits a first MSGA in a first random access procedure in step S5102, the first MSGA comprising a first C-RNTI; and in step S5103, as a response to transmitting the first MSGA, receives a first PDCCH in a first msgB-ResponseWindow; and in step S5104, as a response to the first PDCCH being received, determines whether any condition in a target set of conditions is satisfied, step S5105 being performed in case where any condition in the target set of conditions is satisfied and the step S5105 being not performed in case where each condition in the target set of conditions is not satisfied; and performs a first set of actions in step S5105.

A **second node N02** receives the first MSGA in step S5201; and transmits the first PDCCH in step S5202.

In Embodiment 5, the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the step S5105 being not performed means: not performing the first set of actions.

In one embodiment, the first set of actions is not performed when each condition in the target set of conditions is not satisfied.

In one embodiment, the phrase "each condition in the target set of conditions is not satisfied" comprises that the first condition is not satisfied, and, the second condition is not satisfied.

In one embodiment, the phrase "each condition in the target set of conditions is not satisfied" means that the first condition is not satisfied, and, the second condition is not satisfied.

In one embodiment, as a response to the first PDCCH being received, the first set of actions is not performed when each condition in the target set of conditions is not satisfied.

In one embodiment, as a response to the first PDCCH being received, at least one action in the first set of actions is not performed when each condition in the target set of conditions is not satisfied.

In one embodiment, as a response to the first PDCCH being received, each action in the first set of actions is not performed when each condition in the target set of conditions is not satisfied.

In one embodiment, as a response to the first PDCCH being received, a random access response is not considered to be successfully received when each condition in the target set of conditions is not satisfied.

In one embodiment, as a response to the first PDCCH being received, when each condition in the target set of conditions is not satisfied, the first msgB-ResponseWindow is not stopped if the first msgB-ResponseWindow is still running.

In one embodiment, as a response to the first PDCCH being received, the first msgB-ResponseWindow keeps running when each condition in the target set of conditions is not satisfied.

In one embodiment, as a response to the first PDCCH being received, the first random access procedure is not considered to be successfully completed when each condition in the target set of conditions is not satisfied.

In one embodiment, as a response to the first PDCCH being received, continue to monitor a random access response for the first MSGA in the first msgB-ResponseWindow when each condition in the target set of conditions is not satisfied.

In one embodiment, as a response to the first PDCCH being received, continue to monitor a random access response for a Preamble in the first MSGA in the first msgB-ResponseWindow when each condition in the target set of conditions is not satisfied.

In one embodiment, as a response to the first PDCCH being received, continue to monitor a PDCCH of the first cell identified by an MSGB-RNTI in the first msgB-ResponseWindow when each condition in the target set of conditions is not satisfied; at least a PRACH occasion of a Preamble in the MSGA being used to determine the MSGB-RNTI.

In one embodiment, as a response to the first PDCCH being received, continue to monitor a PDCCH of the first cell identified by the first C-RNTI in the first msgB-ResponseWindow when each condition in the target set of conditions is not satisfied.

In one embodiment, the second condition includes that the second timer is running and the CG-SDT procedure is ongoing.

In one embodiment, the second condition includes at least one condition other than that the second timer is running and the CG-SDT procedure is ongoing.

In one embodiment, the second condition includes only that the second timer is running and the CG-SDT procedure is ongoing.

In one embodiment, the second condition is that the second timer is running and the CG-SDT procedure is ongoing.

In one embodiment, the second condition is satisfied when the second timer is running and, the CG-SDT procedure is ongoing.

In one embodiment, the second condition is not satisfied when the second timer is running and, the CG-SDT procedure is not ongoing.

In one embodiment, the second condition is not satisfied when the second timer is not running and, the CG-SDT process is ongoing.

In one embodiment, the second condition is not satisfied when the second timer is not running, or, the CG-SDT process is not ongoing.

In one embodiment, the first condition is satisfied when the first PDCCH is received.

In one subembodiment, both the first condition and the second condition are satisfied.

In one subembodiment, the first condition is satisfied and, the second condition is not satisfied.

In one embodiment, the second condition is satisfied when the first PDCCH is received.

In one subembodiment, both the first condition and the second condition are satisfied.

In one subembodiment, the second condition is satisfied and, the first condition is not satisfied.

In one embodiment, both the first condition and the second condition are not satisfied when the first PDCCH is received.

In one embodiment, transmit a first MSGA in a first random access procedure, the first MSGA comprising a first C-RNTI; and as a response to transmitting the first MSGA, receive a first PDCCH in a first msgB-ResponseWindow; and as a response to the first PDCCH being received and only a first condition in a target set of conditions being satisfied, perform a first set of actions; herein, the first PDCCH is scrambled by the first C-RNTI, the first PDCCH comprising an uplink grant for a new transmission; the target set of conditions includes at least a first condition and the second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, transmit a first MSGA in a first random access procedure, the first MSGA comprising a first C-RNTI; and as a response to transmitting the first MSGA, receive a first PDCCH in a first msgB-ResponseWindow; and as a response to the first PDCCH being received and each condition in a target set of conditions being not satisfied, do not perform a first set of actions; herein, the first PDCCH is scrambled by the first C-RNTI, the first PDCCH comprising an uplink grant for a new transmission; the target set of conditions includes at least a first condition and the second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, transmit a first MSGA in a first random access procedure, the first MSGA comprising a first C-RNTI; and as a response to transmitting the first MSGA, receive a first PDCCH in a first msgB-ResponseWindow; and as a response to the first PDCCH being received and a second condition in a target set of conditions being satisfied, perform a first set of actions; herein, the first PDCCH is scrambled by the first C-RNTI, the first PDCCH comprising an uplink grant for a new transmission; the target set of conditions includes at least a first condition and the second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one subembodiment, both the first condition and the second condition are satisfied.

In one subembodiment, the second condition is satisfied and, the first condition is not satisfied.

In one subembodiment, the first random access procedure is initiated in the RRC_INACTIVE state.

In one subembodiment, receive a first RRCRelease message before the first random access procedure is initiated, the first RRCRelease message indicating that the first node enters RRC_INACTIVE state, and the first RRCRelease message comprising a CG resource used for SDT.

In one subembodiment, as a response to the first RRCRelease message being received, an RRC sublayer of the first node sends a notification to a lower layer of the first node; and, as a response to the notification being received at a MAC sublayer of the first node, the second timer is started.

In one subembodiment, as a response to a condition for initiating a CG-SDT procedure being satisfied, initiate a first CG-SDT procedure; in the first CG-SDT procedure, transmit a CCCH message on the CG resource used for SDT, the CCCH message comprising either an RRCResumeRequest message or an RRCResumeRequest1 message; the condition for initiating a CG-SDT procedure includes at least that the second timer is running.

In one subembodiment, as a response to a condition for initiating a CG-SDT procedure being satisfied, a MAC sublayer of the first node indicates to an upper layer of the first node that a condition for initiating an SDT procedure is satisfied.

In one subembodiment, as a response to a condition for initiating a CG-SDT procedure being satisfied, a MAC sublayer of the first node indicates to an upper layer of the first node that a condition for initiating a CG-SDT procedure is satisfied.

In one subembodiment, as a response to the CCCH message being transmitted, receive a second PDCCH; the second PDCCH being scrambled by the first C-RNTI.

In one subembodiment, the first CG-SDT procedure is ongoing when the first random access procedure is initiated.

In one subembodiment, the first random access procedure is initiated after the second PDCCH is received.

In one subembodiment, after the second PDCCH is received, the first random access procedure is initiated as a response to any condition in a second set of conditions being satisfied; one condition in the second set of conditions includes that any SSB in a target set of SSBs associated with a target uplink grant has an SS-RSRP no higher than a first threshold; the first RRCRelease message comprises the target uplink grant and the target set of SSBs.

### Embodiment 6

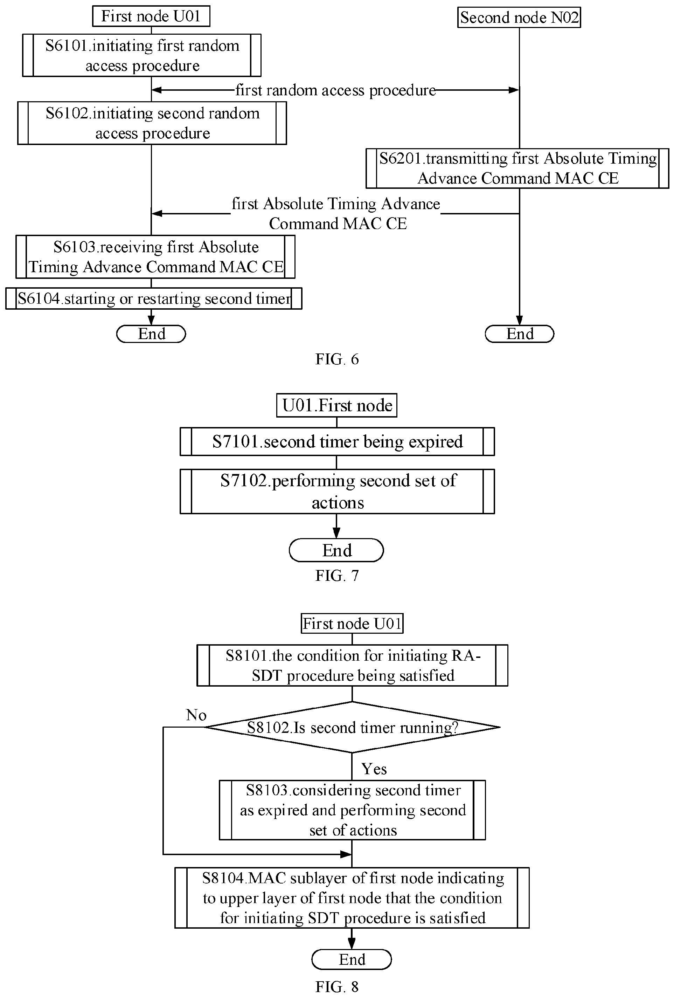

Embodiment 6 illustrates a flowchart of radio signal transmission according to another embodiment of the present application, as shown in FIG. 6. It should be particularly noted that the sequence illustrated herein does not set any limit to the signal transmission order or implementation order in the present application.

The **first node U01** initiates a first random access procedure in step S6101; initiates a second random access procedure in step S6102; in step S6103, receives a first Absolute Timing Advance Command MAC CE during the second random access procedure; and in step S6104, as a response to the first Absolute Timing Advance Command MAC CE being received, starts or restarts the second timer.

A **second node N02** transmits the first Absolute Timing Advance Command MAC CE in step S6201.

In Embodiment 6, when the first Absolute Timing Advance Command MAC CE is received, the CG-SDT procedure is ongoing.

In one embodiment, the step S6101 is executed before the step S6102.

In one embodiment, the step S6101 is executed after the step S6102.

In one embodiment, the step S6101 and the step S6102 are executed simultaneously.

In one embodiment, receive the first Absolute Timing Advance Command MAC CE in the second random access procedure; and as a response to the first Absolute Timing Advance Command MAC CE being received, if the CG-SDT procedure is ongoing, start or restart the second timer; if the CG-SDT procedure is not ongoing, start or restart the first TimeAlignmentTimer.

In one embodiment, receive the first Absolute Timing Advance Command MAC CE in the second random access procedure; and as a response to the first Absolute Timing Advance Command MAC CE being received, if the CG-SDT procedure is not ongoing, start or restart the first TimeAlignmentTimer; otherwise, start or restart the second timer.

In one embodiment, the first Absolute Timing Advance Command MAC CE is an Absolute Timing Advance Command MAC CE, and the format of the Absolute Timing Advance Command MAC CE refers to Section 6.1.3.4a of 3GPP TS38.321.

In one embodiment, the first Absolute Timing Advance Command MAC CE includes a Timing Advance Command field.

In one embodiment, a DCI being used to schedule the first Absolute Timing Advance Command MAC CE is scrambled by the first C-RNTI.

In one embodiment, a DCI being used to schedule the first Absolute Timing Advance Command MAC CE is scrambled by the second C-RNTI, the second C-RNTI being different from the first C-RNTI.

In one embodiment, the second timer is not running when the first Absolute Timing Advance Command MAC CE is received.

In one embodiment, the first TimeAlignmentTimer is running when the first Absolute Timing Advance Command MAC CE is received.

In one embodiment, the first TimeAlignmentTimer is not running when the first Absolute Timing Advance Command MAC CE is received.

In one embodiment, both the first TimeAlignmentTimer and the second timer are not running when the first Absolute Timing Advance Command MAC CE is received.

In one embodiment, as a response to the first Absolute Timing Advance Command MAC CE being received, apply a timing advance command in the first Absolute Timing Advance Command MAC CE, and, start or restart the second timer; when the first Absolute Timing Advance Command MAC CE is received, the CG-SDT procedure is ongoing.

In one embodiment, as a response to the first Absolute Timing Advance Command MAC CE being received, process the first Absolute Timing Advance Command MAC CE, and, consider that a random access response is successfully received, and, stop an msgB- ResponseWindow, and, consider that the second random access procedure is successfully completed; the act of processing the first Absolute Timing Advance Command MAC CE comprises: starting or restarting the second timer; when the first Absolute Timing Advance Command MAC CE is received, the CG-SDT procedure is ongoing.

In one embodiment, a RA_TYPE is set to 2-step RA during the second random access procedure.

In one embodiment, the second random access procedure is the first random access procedure; each condition in the target set of conditions is not satisfied when the first PDCCH is received.

In one subembodiment, the first Absolute Timing Advance Command MAC CE is received in the first msgB-ResponseWindow.

In one subembodiment, the first Absolute Timing Advance Command MAC CE is received in an msgB-ResponseWindow after the first msgB-ResponseWindow.

In one embodiment, the second random access procedure is not the first random access procedure.

In one subembodiment, the first condition is satisfied when the first PDCCH is received.

In one subembodiment, the second condition is satisfied when the first PDCCH is received.

In one subembodiment, the first random access procedure is initiated after the second random access procedure has been successfully completed.

In one subembodiment, the second random access procedure is initiated after the first random access procedure has been successfully completed.

In one subembodiment, both the first random access procedure and the second random access procedure are for the first cell.

In one subembodiment, the first random access procedure and the second random access procedure are each for a different serving cell.

In one subembodiment, one CG-SDT procedure is ongoing when the first random access procedure is initiated; the one CG-SDT procedure is ongoing when the second random access procedure is initiated.

In one subembodiment, one CG-SDT procedure is ongoing when the first random access procedure is initiated; another CG-SDT procedure is ongoing when the second random access procedure is initiated; the one CG-SDT procedure is different from another CG-SDT procedure.

In one subembodiment, no CG-SDT procedure is ongoing when the first random access procedure is initiated; one CG-SDT procedure is ongoing when the second random access procedure is initiated.

### Embodiment 7

Embodiment 7 illustrates a flowchart of a second timer's expiration triggering a second set of actions according to one embodiment of the present application, as shown in FIG. 7.

The **first node U01** determines that the second timer is expired in step S7101; and in step S7102, as a response to determining that the second timer is expired, performs a second set of actions.

In Embodiment 7, the second set of actions includes at least one of clearing any configured uplink grants or flushing all HARQ buffers or maintaining N_{TA} of the first TAG.

In one embodiment, the second set of actions includes clearing any configured uplink grants.

In one embodiment, the second set of actions includes flushing all HARQ buffers.

In one embodiment, the second set of actions includes maintaining N_{TA} of the first TAG.

In one embodiment, the second set of actions includes clearing any configured uplink grants, and flushing all HARQ buffers, and maintaining N_{TA} of the first TAG.

In one embodiment, the second set of actions is for a MAC entity associated with the first cell.

In one embodiment, the second set of actions is for a MAC entity associated with a cell group to which the first cell belongs.

### Embodiment 8

Embodiment 8 illustrates a flowchart of determining whether to consider a second timer as expired and perform a second set of actions according to whether the second timer is running according to one embodiment of the present application, as shown in FIG. 8. It should be particularly noted that the sequence illustrated herein does not set any limit to the signal transmission order or implementation order in the present application.

The **first node U01** determines, in step S8101, that a condition for initiating an RA-SDT procedure is satisfied; in step S8102, determines whether the second timer is running, and when the second timer is running, executes step S8103; otherwise, does not execute the step S8103; in step S8103, considers the second timer as expired and performs the second set of actions; in step S8104, a MAC sublayer of the first node indicates to an upper layer of the first node that a condition for initiating an SDT procedure is satisfied.

In Embodiment 8, when a condition for initiating an RA-SDT procedure is satisfied, determine whether or not to consider the second timer as expired and perform the second set of actions according to whether the second timer is running, and a MAC sublayer of the first node indicates to an upper layer of the first node that a condition for initiating an SDT procedure is satisfied; the action of determining whether to consider the second timer as expired and perform the second set of actions according to whether the second timer is running comprises: when the second timer is running, considering the second timer as expired and performing the second set of actions.

In one embodiment, the step S8103 is executed before the step S8104; in the step S8102, the second timer is running.

In one embodiment, the step S8103 is executed after the step S8104; in the step S8102, the second timer is running.

In one embodiment, the step S8103 and the step S8104 are executed simultaneously; in the step S8102, the second timer is running.

In one embodiment, a MAC sublayer of the first node indicates to an upper layer of the first node that a condition for initiating an RA-SDT procedure is satisfied.

In one embodiment, a condition for initiating an RA-SDT procedure being satisfied is used to determine the initiation of the first random access procedure.

In one subembodiment, the first random access procedure is initiated after a MAC sublayer of the first node indicates to an upper layer of the first node that the condition for initiating an SDT procedure is satisfied.

In one subembodiment, the first random access procedure is used for the RA-SDT; each condition in the target set of conditions is not satisfied.

In one embodiment, a condition for initiating an RA-SDT procedure being satisfied is independent of the first random access procedure.

In one embodiment, after the first random access procedure has been successfully completed, the higher sublayer of the RRC sublayer of the first node U01 requests restoration of an RRC connection.

In one embodiment, when a condition for initiating an RA-SDT procedure is satisfied and the second timer is running, consider the second timer as expired and the second set of actions is performed.

In one embodiment, when the condition for initiating an RA-SDT process is satisfied and the second timer is running, consider the second timer as expired and perform the second set of actions, and a MAC sublayer of the first node indicates to an upper layer of the first node that the condition for initiating an SDT procedure is satisfied.

In one embodiment, when the condition for initiating an RA-SDT process is satisfied and the second timer is running, consider the second timer as expired and perform the second set of actions, and then, a MAC sublayer of the first node indicates to an upper layer of the first node that the condition for initiating an SDT procedure is satisfied.

In one embodiment, when the condition for initiating an RA-SDT procedure is satisfied and the second timer is not running, the second set of actions is not performed.

In one embodiment, when a condition for initiating an RA-SDT procedure is satisfied and the second timer is not running, the action "consider the second timer as expired" is not performed.

In one embodiment, when a condition for initiating an RA-SDT procedure is satisfied and the second timer is not running, no action is performed on the second timer.

In one embodiment, when the condition for initiating an RA-SDT process is satisfied and the second timer is not running, a MAC sublayer of the first node indicates to an upper layer of the first node that the condition for initiating an SDT procedure is satisfied.

In one embodiment, the higher sublayer of the RRC sublayer of the first node U01 requests restoration of an RRC connection.

In one embodiment, when the higher sublayer of the RRC sublayer of the first node U01 requests restoration of an RRC connection, determine whether a condition for initiating an RA-SDT procedure is satisfied.

In one embodiment, the condition for initiating an RA-SDT procedure being satisfied comprises: the first node being configured with sdt-Config.

In one embodiment, the condition for initiating an RA-SDT procedure being satisfied comprises: SIB 1 of the first cell includes sdt-ConfigCommon.

In one embodiment, the condition for initiating an RA-SDT procedure being satisfied comprises: all pending uplink data is mapped to Radio Bearers (RBs) configured for SDT.

In one embodiment, the condition for initiating an RA-SDT procedure being satisfied comprises: the data volume of the pending UL data across all RBs configured for SDT is less than or equal to sdt-DataVolumeThreshold.

In one embodiment, the condition for initiating an RA-SDT procedure being satisfied comprises: the RSRP of the downlink pathloss reference is higher than sdt-RSRP-Threshold, or, alternatively, sdt-RSRP-Threshold is not configured.

In one embodiment, the condition for initiating an RA-SDT procedure being satisfied comprises: a set of Random Access resources for performing RA-SDT on the selected uplink carrier are selected on the selected UL carrier.

In one embodiment, if the first node is configured with sdt-Config, and, SIB1 of the first cell includes sdt-ConfigCommon, and, all pending uplink data is mapped to RBs configured for SDT, and, the data volume of the pending UL data across all RBs configured for SDT is less than or equal to sdt-DataVolumeThreshold, and, the RSRP of the downlink pathloss reference is higher than sdt-RSRP-Threshold or, alternatively, sdt-RSRP-Threshold is not configured, and, a set of Random Access resources for performing RA-SDT are selected on the selected UL carrier, the condition for initiating an RA-SDT procedure is satisfied.

In one embodiment, the condition for initiating an RA-SDT procedure being satisfied comprises that the first node is configured with sdt-Config, and, SIB1 of the first cell includes sdt-ConfigCommon, and, all pending uplink data is mapped to RBs configured for SDT, and, the data volume of the pending UL data across all RBs configured for SDT is less than or equal to sdt-DataVolumeThreshold, and, the RSRP of the downlink pathloss reference is higher than sdt-RSRP-Threshold or, alternatively, sdt-RSRP-Threshold is not configured, and, a set of Random Access resources for performing RA-SDT are selected on the selected UL carrier.

### Embodiment 9

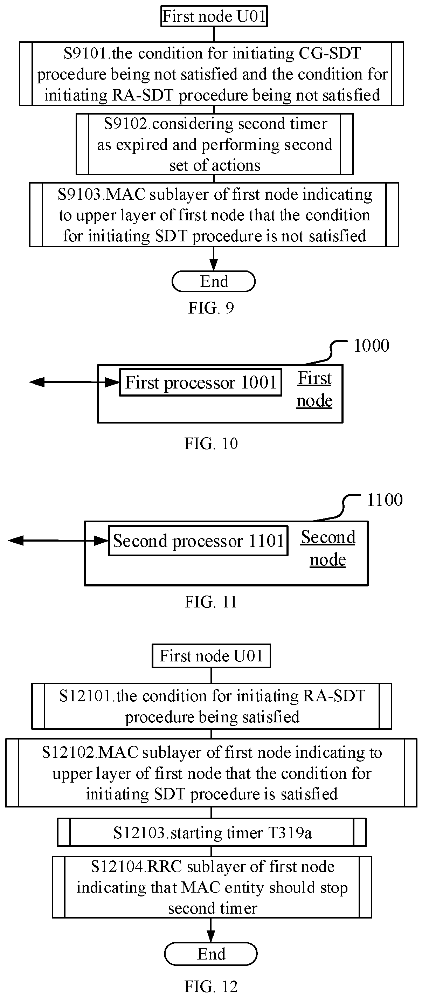

Embodiment 9 illustrates a flowchart of considering a second timer as expired and a second set of actions is performed when an SDT condition is not satisfied according to one embodiment of the present application, as shown in FIG. 9. It should be particularly noted that the sequence illustrated herein does not set any limit to the signal transmission order or implementation order in the present application.

The **first node U01** determines in step S9101 that a condition for initiating a CG-SDT procedure is not satisfied and a condition for initiating an RA-SDT procedure is not satisfied; in step S9102, when the condition for initiating a CG-SDT procedure is not satisfied and the condition for initiating an RA-SDT procedure is not satisfied, considers the second timer as expired and performs the second set of actions; and in step S9103, a MAC sublayer of the first node indicates to an upper layer of the first node that a condition for initiating an SDT procedure is not satisfied.

In one embodiment, the step S9102 is executed before the step S9103.

In one embodiment, the step S9102 is executed after the step S9103.

In one embodiment, the step S9102 and the step S9103 are executed simultaneously.

In one embodiment, when a condition for initiating a CG-SDT procedure is not satisfied and a condition for initiating an RA-SDT procedure is not satisfied, consider the second timer as expired and perform the second set of actions, and then a MAC sublayer of the first node indicating to an upper layer of the first node that a condition for initiating an SDT procedure is not satisfied.

In one embodiment, after a MAC sublayer of the first node indicates to an upper layer of the first node that a condition for initiating an SDT procedure is not satisfied, the first node starts a timer T319.

In one embodiment, the higher sublayer of the RRC sublayer of the first node U01 requests restoration of an RRC connection.

In one embodiment, a Paging message indicates restoration of an RRC connection.

In one embodiment, when the higher sublayer of the RRC sublayer of the first node U01 requests restoration of an RRC connection, determine the condition for initiating a CG-SDT procedure or whether the condition for initiating an RA-SDT procedure is satisfied.

In one embodiment, if the first node is not configured with sdt-Config, the condition for initiating a CG-SDT procedure is not satisfied.

In one embodiment, if SIB1 of the first cell does not include sdt-ConfigCommon, the condition for initiating a CG-SDT procedure is not satisfied.

In one embodiment, if all of the pending UL data is not mapped to RBs configured for SDT, the condition for initiating a CG-SDT procedure is not satisfied.

In one embodiment, if the data volume of the pending UL data across all RBs configured for SDT is more than sdt-DataVolumeThreshold, the condition for initiating the CG-SDT process is not satisfied, the condition for initiating a CG-SDT procedure is not satisfied.

In one embodiment, if the RSRP of the downlink pathloss reference is not higher than sdt-RSRP-Threshold, the condition for initiating a CG-SDT procedure is not satisfied.

In one embodiment, if CG-SDT is not configured on the selected UL carrier, the condition for initiating a CG-SDT procedure is not satisfied.

In one embodiment, if CG-SDT is configured on the selected UL carrier, and TA of the configured grant Type 1 resource is not valid, the condition for initiating a CG-SDT procedure is not satisfied.

In one embodiment, if no SSB configured for CG-SDT with SS-RSRP above cg-SDT-RSRP-ThresholdSSB is available, the condition for initiating a CG-SDT procedure is not satisfied.

In one embodiment, if the second timer is not running, the condition for initiating a CG-SDT procedure is not satisfied.

In one embodiment, if the RSRP values for the stored downlink pathloss reference and the current downlink pathloss reference are not valid, the condition for initiating a CG-SDT procedure is not satisfied.

In one embodiment, if compared to the stored downlink pathloss reference RSRP value, the current RSRP value of the downlink pathloss reference has increased/decreased by more than cg-SDT-RSRP-ChangeThreshold, a condition for initiating a CG-SDT procedure is not satisfied.

### Embodiment 10

Embodiment 10 illustrates a structure block diagram of a processing device used in a first node according to one embodiment of the present application, as shown in FIG. 10. In FIG. 10, a processing device 1000 in the first node comprises a first processor 1001.

The first processor 1001 transmits a first MSGA in a first random access procedure, the first MSGA comprising a first C-RNTI; and as a response to transmitting the first MSGA, receives a first PDCCH in a first msgB-ResponseWindow; and as a response to the first PDCCH being received, performs a first set of actions when any condition in a target set of conditions is satisfied.

In Embodiment 10, the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the first set of actions is not performed when each condition in the target set of conditions is not satisfied.

In one embodiment, the second condition includes that the CG-SDT procedure is ongoing.

In one embodiment, the first processor 1001 receives a first Absolute Timing Advance Command MAC CE in a second random access procedure; and as a response to the first Absolute Timing Advance Command MAC CE being received, starts or restarts the second timer; herein, when the first Absolute Timing Advance Command MAC CE is received, the CG-SDT procedure is ongoing.

In one embodiment, the first processor 1001 determines that the second timer is expired, and performs a second set of actions as a response to determining that the second timer is expired; herein, the second set of actions includes at least one of clearing any configured uplink grants or flushing all HARQ buffers or maintaining N_{TA} of the first TAG.

In one embodiment, the first processor 1001, when a condition for initiating an RA-SDT procedure is satisfied, determines whether or not to consider the second timer as expired and perform the second set of actions according to whether the second timer is running, and a MAC sublayer of the first node indicates to an upper layer of the first node that a condition for initiating an SDT procedure is satisfied; herein, the action of determining whether to consider the second timer as expired and perform the second set of actions according to whether the second timer is running comprises: when the second timer is running, considering the second timer as expired and performing the second set of actions.

In one embodiment, the first processor 1001, when a condition for initiating a CG-SDT procedure is not satisfied and a condition for initiating an RA-SDT procedure is not satisfied, considers the second timer as expired and performs the second set of actions, and a MAC sublayer of the first node indicating to an upper layer of the first node that a condition for initiating an SDT procedure is not satisfied.

In one embodiment, the first processor 1001, when a condition for initiating an RA-SDT procedure is satisfied, a MAC sublayer of the first node indicating to an upper layer of the first node that a condition for initiating an SDT procedure is satisfied; after the MAC sublayer of the first node has indicated to the upper layer of the first node that the condition for initiating the SDT procedure is satisfied, starting a timer T319a, and, an RRC sublayer of the first node indicating that a MAC entity should stop the second timer.

In one embodiment, the first processor 1001 comprises the first receiver and the first transmitter.

In one embodiment, the first receiver comprises the antenna 452, the receiver 454, the multi-antenna receiving processor 458, the receiving processor 456, the controller/processor 459, the memory 460 and the data source 467 in FIG. 4 of the present application.

In one embodiment, the first receiver comprises the antenna 452, the receiver 454, the multi-antenna receiving processor 458 and the receiving processor 456 in FIG. 4 of the present application.

In one embodiment, the first receiver comprises the antenna 452, the receiver 454 and the receiving processor 456 in FIG. 4 of the present application.

In one embodiment, the first transmitter comprises the antenna 452, the transmitter 454, the multi-antenna transmitting processor 457, the transmitting processor 468, the controller/processor 459, the memory 460 and the data source 467 in FIG. 4 of the present application.

In one embodiment, the first transmitter comprises the antenna 452, the transmitter 454, the multi-antenna transmitting processor 457 and the transmitting processor 468 in FIG. 4 of the present application.

In one embodiment, the first transmitter comprises the antenna 452, the transmitter 454 and the transmitting processor 468 in FIG. 4 of the present application.

### Embodiment 11

Embodiment 11 illustrates a structure block diagram of a processing device used in a second node according to one embodiment of the present application, as shown in FIG. 11. In FIG. 11, a processing device 1100 in the second node comprises a second processor 1101.

The second processor 1101 receives a first MSGA in a first random access procedure, the first MSGA comprising a first C-RNTI; and as a response to receiving the first MSGA, transmits a first PDCCH.

In Embodiment 11, as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

In one embodiment, the first set of actions is not performed when each condition in the target set of conditions is not satisfied.

In one embodiment, the second condition includes that the CG-SDT procedure is ongoing.

In one embodiment, the second processor 1101 transmits a first Absolute Timing Advance Command MAC CE in a second random access procedure; herein, as a response to the first Absolute Timing Advance Command MAC CE being received by a transmitter of the first MSGA, the transmitter of the first MSGA starts or restarts the second timer; when the first Absolute Timing Advance Command MAC CE is received, the CG-SDT procedure is ongoing.

In one embodiment, as a response to that the second timer is expired, a transmitter of the first MSGA performs a second set of actions; the second set of actions includes at least one of clearing any configured uplink grants or flushing all HARQ buffers or maintaining N_{TA} of the first TAG.

In one embodiment, when a condition for initiating an RA-SDT procedure is satisfied, a transmitter of the first MSGA determines whether or not to consider the second timer as expired and perform the second set of actions according to whether the second timer is running, and a MAC sublayer of the transmitter of the first MSGA indicates to an upper layer of the transmitter of the first MSGA that a condition for initiating an SDT procedure is satisfied; herein, the action of determining whether to consider the second timer as expired and perform the second set of actions according to whether the second timer is running comprises: when the second timer is running, considering the second timer as expired and performing the second set of actions.

In one embodiment, when a condition for initiating a CG-SDT procedure is not satisfied and a condition for initiating an RA-SDT procedure is not satisfied, a transmitter of the first MSGA considers the second timer as expired and performs the second set of actions, and a MAC sublayer of the transmitter of the first MSGA indicates to an upper layer of the transmitter of the first MSGA that a condition for initiating an SDT procedure is not satisfied.

In one embodiment, when a condition for initiating an RA-SDT procedure is satisfied, a MAC sublayer of the transmitter of the first MSGA indicates to an upper layer of the transmitter of the first MSGA that a condition for initiating an SDT procedure is satisfied; after the indication of the MAC sublayer of the transmitter of the first MSGA to the upper layer of the transmitter of the first MSGA that the condition for initiating the SDT procedure has been satisfied, the transmitter of the first MSGA starts a timer T319a, and, an RRC sublayer of the transmitter of the first MSGA indicates that a MAC entity should stop the second timer.

In one embodiment, the second processor 1101 comprises the second receiver and the second transmitter.

In one embodiment, the second transmitter comprises the antenna 420, the transmitter 418, the multi-antenna transmitting processor 471, the transmitting processor 416, the controller/processor 475 and the memory 476 in FIG. 4 of the present application.

In one embodiment, the second transmitter comprises the antenna 420, the transmitter 418, the multi-antenna transmitting processor 471 and the transmitting processor 416 in FIG. 4 of the present application.

In one embodiment, the second transmitter comprises the antenna 420, the transmitter 418 and the transmitting processor 416 in FIG. 4 of the present application.

In one embodiment, the second receiver comprises the antenna 420, the receiver 418, the multi-antenna receiving processor 472, the receiving processor 470, the controller/processor 475 and the memory 476 in FIG. 4 of the present application.

In one embodiment, the second receiver comprises the antenna 420, the receiver 418, the multi-antenna receiving processor 472 and the receiving processor 470 in FIG. 4 of the present application.

In one embodiment, the second receiver comprises the antenna 420, the receiver 418 and the receiving processor 470 in FIG. 4 of the present application.

### Embodiment 12

Embodiment 12 illustrates a flowchart of an RRC sublayer of a first node indicating that a MAC entity should stop a second timer according to one embodiment of the present application, as shown in FIG. 12. It should be particularly noted that the sequence illustrated herein does not set any limit to the signal transmission order or implementation order in the present application.

The **first node U01** determines in step S12101 that a condition for initiating an RA-SDT procedure is satisfied; in step S12102, when a condition for initiating an RA-SDT procedure is satisfied, a MAC sublayer of the first node indicates to an upper layer of the first node that a condition for initiating an SDT procedure is satisfied; in step S12103, after the MAC sublayer of the first node has indicated to the upper layer of the first node that the condition for initiating the SDT procedure is satisfied, starts a timer T319a, and in step S12104, an RRC sublayer of the first node indicates that a MAC entity should stop the second timer.

In one embodiment, the step S12103 is executed before the step S12104.

In one embodiment, the step S12103 is executed after the step S12104.

In one embodiment, the step S12103 and the step S12104 are executed simultaneously.

In one embodiment, before determining that a condition for initiating an RA-SDT procedure is satisfied, it is determined that a condition for initiating a CG-SDT procedure is not satisfied.

In one embodiment, after the MAC sublayer of the first node has indicated to the upper layer of the first node that the condition for initiating the SDT procedure is satisfied, when a condition for initiating a CG-SDT procedure is not satisfied and a condition for initiating an RA-SDT procedure is satisfied, an RRC sublayer of the first node indicates that a MAC entity should stop the second timer.

In one embodiment, a timer T319a is started at the RRC sublayer.

In one embodiment, a MAC sublayer of the first node indicates to an upper layer of the first node that a condition for initiating an RA-SDT procedure is satisfied.

In one embodiment, the second timer is running when it is determined that a condition for initiating an RA-SDT procedure is satisfied.

In one embodiment, as the MAC sublayer of the first node receives an indication of the stop of the second timer from an upper layer, consider the second timer as expired.

In one embodiment, as the MAC sublayer of the first node receives an indication of the stop of the second timer from an upper layer, consider the second timer as expired and perform the second set of actions.

### Embodiment 13

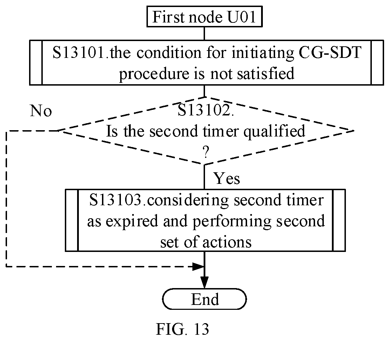

Embodiment 13 illustrates a flowchart of a condition for initiating a CG-SDT procedure not being satisfied according to one embodiment of the present application, as shown in FIG. 13. It should be particularly noted that the sequence illustrated herein does not set any limit to the signal transmission order or implementation order in the present application.

The **first node U01** determines in step S13101 that a condition for initiating a CG-SDT procedure is not satisfied, in step S13102, when the condition for initiating a CG-SDT procedure is not satisfied, executes step S13103 if the second timer is qualified; otherwise, does not execute the step S13103; and, in step S13103, considers the second timer as expired and performs the second set of actions.

In one embodiment, the step S13102 exists.

In one embodiment, the step S13102 does not exist.

In one embodiment, when a condition for initiating a CG-SDT procedure is not satisfied, consider the second timer as expired and perform the second set of actions.

In one embodiment, when a condition for initiating a CG-SDT procedure is not satisfied, "considering the second timer as expired and performing the second set of actions" is performed regardless of whether or not the second timer is running.

In one embodiment, when a condition for initiating a CG-SDT procedure is not satisfied, determine whether or not to consider the second timer as expired and perform the second set of actions according to at least whether the second timer is qualified.

In one subembodiment, the phrase "the second timer is qualified" means that the second timer is configured.

In one subsidiary embodiment of the above subembodiment, if the second timer is not configured, the second timer does not satisfy the condition.

In one subembodiment, the phrase "the second timer is qualified" means that the second timer is running.

In one subsidiary embodiment of the above subembodiment, if the second timer is not running, the second timer does not satisfy the condition.

In one subsidiary embodiment of the above subembodiment, if the second timer is not configured, the second timer does not satisfy the condition.

In one subembodiment, the phrase "the second timer is qualified" means that the second timer is configured and the second timer is running.

In one subsidiary embodiment of the above subembodiment, if the second timer is not configured, the second timer does not satisfy the condition.

In one subsidiary embodiment of the above subembodiment, if the second timer is not running, the second timer does not satisfy the condition.

In one subsidiary embodiment of the above subembodiment, if the second timer is not configured, or, if the second timer is configured and the second timer is not running, the second timer does not satisfy the condition.

In one subembodiment, when the condition for initiating a CG-SDT procedure is not satisfied, if the second timer is qualified, consider the second timer as expired and perform the second set of actions; otherwise, the action of "considering the second timer as expired and performing the second set of actions" is not performed.

In one subembodiment, when the condition for initiating a CG-SDT procedure is not satisfied, if the second timer is qualified, consider the second timer as expired and perform the second set of actions; if the second timer does not satisfy the condition, the action of "considering the second timer as expired and performing the second set of actions" is not performed.

In one subembodiment, when a condition for initiating a CG-SDT procedure is not satisfied, consider the second timer as expired and perform the second set of actions only if the second timer is qualified.

In one subembodiment, when a condition for initiating a CG-SDT procedure is not satisfied, if the second timer does not satisfy the condition, the action of "considering the second timer as expired and performing the second set of actions" is not performed.

In one embodiment, after the action of "considering the second timer as expired and performing the second set of actions", determine whether a condition for initiating an RA-SDT procedure is satisfied.

In one embodiment, after the action of "considering the second timer as expired and performing the second set of actions", if a condition for initiating an RA-SDT procedure is satisfied, a MAC sublayer of the first node indicates to an upper layer of the first node that a condition for initiating an SDT procedure is satisfied.

In one embodiment, after the action of "considering the second timer as expired and performing the second set of actions", if a condition for initiating an RA-SDT procedure is satisfied, the action of "considering the second timer as expired and performing the second set of actions" is not performed.

In one embodiment, after the action of "considering the second timer as expired and performing the second set of actions", if a condition for initiating an RA-SDT procedure is not satisfied, a MAC sublayer of the first node indicates to an upper layer of the first node that a condition for initiating an SDT procedure is not satisfied.

In one embodiment, after the action of "considering the second timer as expired and performing the second set of actions", if a condition for initiating an RA-SDT procedure is not satisfied, after the action that "a MAC sublayer of the first node indicates to an upper layer of the first node that a condition for initiating an SDT procedure is not satisfied", the first node starts a timer T319, and, that "an RRC sublayer of the first node indicates that a MAC entity should stop the second timer" is not performed.

The ordinary skill in the art may understand that all or part of steps in the above method may be implemented by instructing related hardware through a program. The program may be stored in a computer readable storage medium, for example Read-Only-Memory (ROM), hard disk or compact disc, etc. Optionally, all or part of steps in the above embodiments also may be implemented by one or more integrated circuits. Correspondingly, each module unit in the above embodiment may be realized in the form of hardware, or in the form of software function modules. The present application is not limited to any combination of hardware and software in specific forms. The UE and terminal in the present application include but are not limited to unmanned aerial vehicles, communication modules on unmanned aerial vehicles, telecontrolled aircrafts, aircrafts, diminutive airplanes, mobile phones, tablet computers, notebooks, vehicle-mounted communication equipment, wireless sensor, network cards, terminals for Internet of Things (IOT), RFID terminals, NB-IOT terminals, Machine Type Communication (MTC) terminals, enhanced MTC (eMTC) terminals, data cards, low-cost mobile phones, low-cost tablet computers, etc. The base station or system device in the present application includes but is not limited to macro-cellular base stations, micro-cellular base stations, home base stations, relay base station, gNB (NR node B), Transmitter Receiver Point (TRP), and other radio communication equipment.

The above are merely the preferred embodiments of the present application and are not intended to limit the scope of protection of the present application. Any modification, equivalent substitute and improvement made within the spirit and principle of the present application are intended to be included within the scope of protection of the present application.

## Claims

1. A first node for wireless communications, comprising:
a first processor, transmitting a first MSGA in a first random access procedure, the first MSGA comprising a first C-RNTI; and as a response to transmitting the first MSGA, receiving a first PDCCH in a first msgB-ResponseWindow; and as a response to the first PDCCH being received, performing a first set of actions when any condition in a target set of conditions is satisfied;
where the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

2. The first node according to claim 1, **characterized in** not performing the first set of actions when each condition in the target set of conditions is not satisfied.

3. The first node according to claim 1 or 2, **characterized in that** the second condition includes that the CG-SDT procedure is ongoing.

4. The first node according to any of claims 1-3, **characterized in** comprising:
the first processor, receiving a first Absolute Timing Advance Command MAC CE in a second random access procedure; and as a response to the first Absolute Timing Advance Command MAC CE being received, starting or restarting the second timer;
where when the first Absolute Timing Advance Command MAC CE is received, the CG-SDT procedure is ongoing.

5. The first node according to any of claims 1-4, **characterized in** comprising:
the first processor, determining that the second timer is expired; and as a response to determining that the second timer is expired, performing a second set of actions;
where the second set of actions includes at least one of clearing any configured uplink grants or flushing all Hybrid Automatic Repeat Request (HARQ) buffers or maintaining *N_{TA}* of the first TAG.

6. The first node according to claim 5, **characterized in** comprising:
the first processor, when a condition for initiating an RA-SDT procedure is satisfied, determining whether to consider the second timer as expired and perform the second set of actions according to whether the second timer is running, and, a MAC sublayer of the first node indicating to an upper layer of the first node that a condition for initiating an SDT procedure is satisfied;
where the action of determining whether to consider the second timer as expired and perform the second set of actions according to whether the second timer is running comprises: when the second timer is running, considering the second timer as expired and performing the second set of actions.

7. The first node according to claim 5 or 6, **characterized in** comprising:
the first processor, when a condition for initiating a CG-SDT procedure is not satisfied and a condition for initiating an RA-SDT procedure is not satisfied, considering the second timer as expired and performing the second set of actions, and a MAC sublayer of the first node indicating to an upper layer of the first node that a condition for initiating an SDT procedure is not satisfied.

8. A second node for wireless communications, comprising:
a second processor, receiving a first MSGA in a first random access procedure, the first MSGA comprising a first C-RNTI; and as a response to receiving the first MSGA, transmitting a first PDCCH;
where as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

9. A method in a first node for wireless communications, comprising:
transmitting a first MSGA in a first random access procedure, the first MSGA comprising a first C-RNTI; and as a response to transmitting the first MSGA, receiving a first PDCCH in a first msgB-ResponseWindow; and as a response to the first PDCCH being received, performing a first set of actions when any condition in a target set of conditions is satisfied;
where the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.

10. A method in a second node for wireless communications, comprising:
receiving a first MSGA in a first random access procedure, the first MSGA comprising a first C-RNTI; and as a response to receiving the first MSGA, transmitting a first PDCCH;
where as a response to the first PDCCH being received by a transmitter of the first MSGA in a first msgB-ResponseWindow, the transmitter of the first MSGA performs a first set of actions when any condition in a target set of conditions is satisfied; the first PDCCH is scrambled by the first C-RNTI, the first PDCCH comprising an uplink grant for a new transmission; the target set of conditions includes at least a first condition and a second condition, the first condition comprising that a first TimeAlignmentTimer is running, and the second condition comprising that at least a second timer is running, the second timer being used for a CG-SDT procedure; the first set of actions includes at least one of determining that a random access response is successfully received or stopping the first msgB-ResponseWindow or determining that the first random access procedure is successfully completed.
